# EUROPEAN PATENT SPECIFICATION

(11) **EP 2 216 238 B1**
(45) Date of publication and mention of the grant of the patent: **05.10.2011**
(21) Application number: 10152565.7
(22) Date of filing: 03.02.2010
(51) Int. Cl.: B62D 25/10, B60R 3/00, E02F 9/16

(54) **Bodywork for an operating machine and operating machine comprising said bodywork**
Karosserie für eine Betriebsmaschine und Betriebsmaschine mit der Karosserie
Caisse pour machine de manýuvre et machine de manýuvre comportant cette caisse

(30) Priority: 06.02.2009 IT UD20090025
(43) Date of publication of application: 11.08.2010
(73) Proprietor: CASAGRANDE SpA, 33074 Fontanafredda (PN) (IT)
(72) Inventor: Casagrande, Mauro, 33077 Sacile (PN) (IT)
(74) Representative: Petraz, Gilberto Luigi

(56) References cited:
- WO-A1-01/76912
- JP-U- 6 085 148
- JP-U- 52 141 725
- US-A- 3 860 083

## Description

### FIELD OF THE INVENTION

The present invention concerns a bodywork used to cover an operating machine. In particular, the present invention concerns a bodywork able to be mounted on a tracked operating machine, which makes the machine easier to inspect and to maintain and increases safety for the workers.

The invention is applied, preferentially although not exclusively, to drilling machines, buckets, borers or milling cutters, machines for installing poles, for making wells or diaphragms, or other machine having similar characteristics.

The present invention also concerns the operating machine comprising the bodywork.

JP-U-06 085148 describes a bodywork for an operating machine on which the preambles to the independent claims are based.

### BACKGROUND OF THE INVENTION

Operating machines are known, used on building sites or road works, for example for excavating ground, for drilling rock walls or other.

These known machines generally comprise a central body that has a housing compartment in which a propelling device and a plurality of maneuvering members of a mechanical and/or hydraulic and /or electric type or other are located, able to move one or more arms disposed protruding from the body of the machine and on which a suitable work tool is mounted, such as an excavation or drilling head.

Known operating machines also comprise an external protective bodywork, associated with the central body of the machine, and movement means such as for example tracks or wheels.

The bodywork is usually provided with opening doors to provide access to said housing compartment and to other inspection compartments of the machine.

It is known that, in order to carry out maintenance operations on the propelling device or the maneuvering members, since these are disposed at a height of even more than 2 meters, it is necessary to attach to the perimeter of the machine suitable gangways to reach the compartments. The gangways are generally attached to the central body, above the movement means.

Known operating machines also comprise one or more walkways on the upper part of the central body, which allow a visual inspection from above of the maneuvering members of the machine. The walkways generally include safety parapets disposed fixed along one or more sides of the walkway, since their height, typically about 2-3 meters, is such as to provide suitable protection for the workers, as laid down by the law.

One disadvantage of these known operating machines is the disposition and sizes of the parapets and gangways that are un-aesthetic and increase the bulk of the operating machine. Furthermore, the constant presence of the gangways above the movement means can cause material to be deposited between them and the gangways, with a consequent difficulty for the machine to move forward.

Furthermore, when the machine is operating, the gangways and parapets, due to the effect of the vibrations, can cause noise or be subject to subsiding.

Operating machines are known that are provided with removable gangways, which can be attached to the central body of the machine, for example by means of side members, attached protruding from the central body and also removable. The gangways are associated with the machine to carry out the maintenance operations and, once these are concluded, they can be removed together with the relative side members.

This solution is disadvantageous because the assembly and subsequent removal of the gangways considerably affect the maintenance times.

Another known solution provides to prepare "drawer-type" gangways in the lower part of the machine. This location is disadvantageous because, when the machine is operating, mud and detritus are deposited on the gangways which can prevent them from opening.

Purpose of the present invention is to achieve a bodywork for operating machines that allows to carry out maintenance operations simply and quickly and that guarantees safety for the workers, reducing, when necessary in the normal performance of activity, the overall bulk of the machine.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purpose, a bodywork for covering an operating machine comprises at least a frame provided with at least a plurality of uprights.

The bodywork according to the present invention also comprises a plurality of walls, of which at least upper walls and lateral walls, connected to each other so as to delimit a determinate bulk inside which at least a housing compartment is provided.

According to a characteristic feature of the present invention, at least one of said lateral walls comprises at least a portion of wall selectively movable between a first operating position, to close said housing compartment, and a second operating position, to open said housing compartment.

In the first operating position, the portion of wall is substantially adjacent to at least one of the uprights and comprised within said determinate bulk, whereas in the second operating position the portion of wall is protruding toward the outside with respect to said determinate bulk.

The portion of wall also provides anchorage means, able to be selectively activated to maintain it in a stable position in the second operating position.

The portion of wall is conformed so as to have a resistance to lateral or vertical thrust in the second operating position, and thus to function, respectively, as a parapet element or as a gangway element for the workers.

In this way respective conditions of selective access to the compartment are defined, and it is not necessary to assemble gangways on the outside of the machine, since they are already integrated into the bodywork, reducing maintenance times and/or the bulk of the machine, and guaranteeing that the gangways can be used by the workers, with a consequent increase in the on-site safety.

According to a variant, the lateral wall comprises at least a first portion of wall and a second portion of wall.

The first portion of wall is selectively movable from the first operating position to the second operating position, in which it defines a substantially horizontal plane so as to function as a gangway element.

The second portion of wall is disposed substantially parallel and adjacent to the plane on which the first portion of wall lies in the first operating position, and is selectively translatable from the first operating position to the second operating position in which it defines a substantially vertical plane so as to function as a parapet element with respect to the relative upper wall.

This solution allows to use, for example, the second portion of lateral wall of the bodywork as a parapet in the event of an inspection of the machine from above, using the relative upper wall of the bodywork as a walkway.

Advantageously, in the event that the lateral walls and the upper walls of the bodywork delimit two lateral compartments, for each lateral wall the presence is provided of a selectively movable portion of wall, for access to each compartment.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a three-dimensional view of an operating machine comprising a bodywork according to the present invention in a closed operating position;
- fig. 2 is a second three-dimensional view of the machine in fig. 1 in a closed operating position;
- fig. 3 is a three-dimensional view of the operating machine in fig. 1 in an open operating position;
- fig. 4 is a three-dimensional view of a bodywork according to the present invention in a closed operating position;
- fig. 5 is a three-dimensional view of a bodywork according to the present invention in an open operating position;
- fig. 6 is a lateral view of a detail of the bodywork in fig. 5.

### DETAILED DESCRIPTION OF A PREFERENTIAL FORM OF EMBODIMENT

With reference to the attached drawings, a bodywork 10 according to the present invention is used in an operating machine 30.

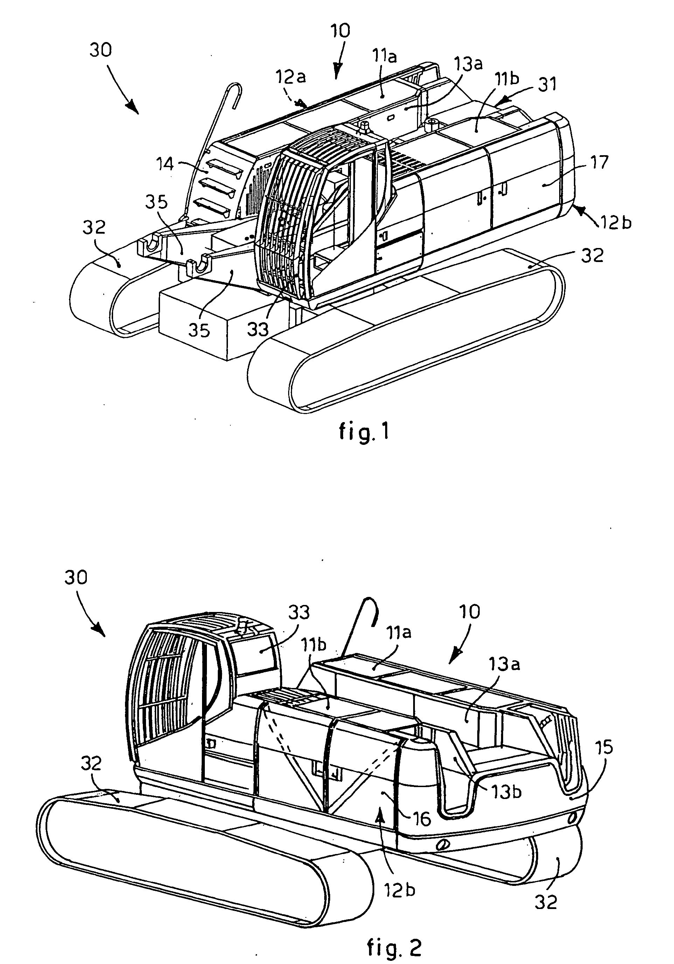

With particular reference to figs. 1, 2 and 3, the machine 30 comprises a central body 31, a pair of arms 35, disposed protruding from the front of the central body 31 and able to support a work tool, for example an excavation or drilling head, and movement means, in this case tracks 32.

The central body 31 comprises a command station 33, a propelling device and maneuvering members 34 of a mechanical, hydraulic, electric or other type, able to drive and move the work tool possibly assembled on the pair of arms 35 and housed in suitable housing compartments 19a, 19b.

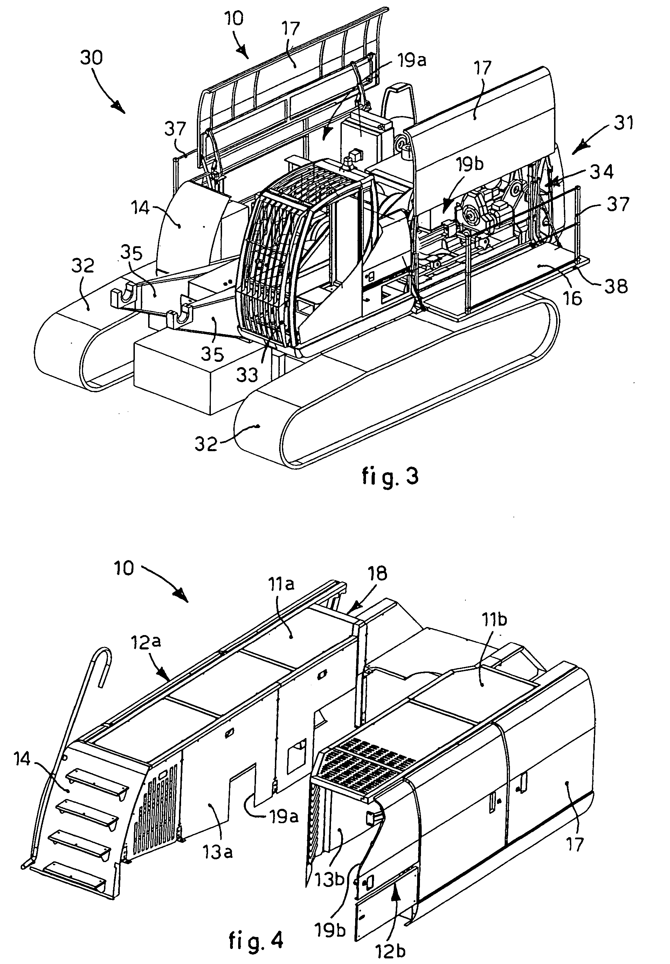

In particular, with reference to fig. 4, the bodywork 10 according to the present invention provides a base frame 18 comprising a plurality of uprights and cross elements.

The bodywork 10 also comprises a plurality of walls 11a, 11b, 12a, 12b, 13a, 13b, 14 and 15, in this case two upper walls 11a and 11b, two external lateral walls 12a and 12b, two internal lateral walls 13a and 13b, a front wall 14 and a rear wall 15.

The external lateral wall 12a, the upper wall 11a, the internal lateral wall 13a and part of the rear wall 15 are connected to each other so as to define, in cooperation with the corresponding uprights 23 and the cross elements, said housing compartment 19a, to cover and protect part of the maneuvering members 34.

In the same way, the external lateral wall 12b, the upper wall 11b, the internal lateral wall 13b and part of the rear wall 15 are connected to each other so as to define, in cooperation with the corresponding uprights 23 and the cross elements, said housing compartment 19b, to cover and protect part of the maneuvering members 34.

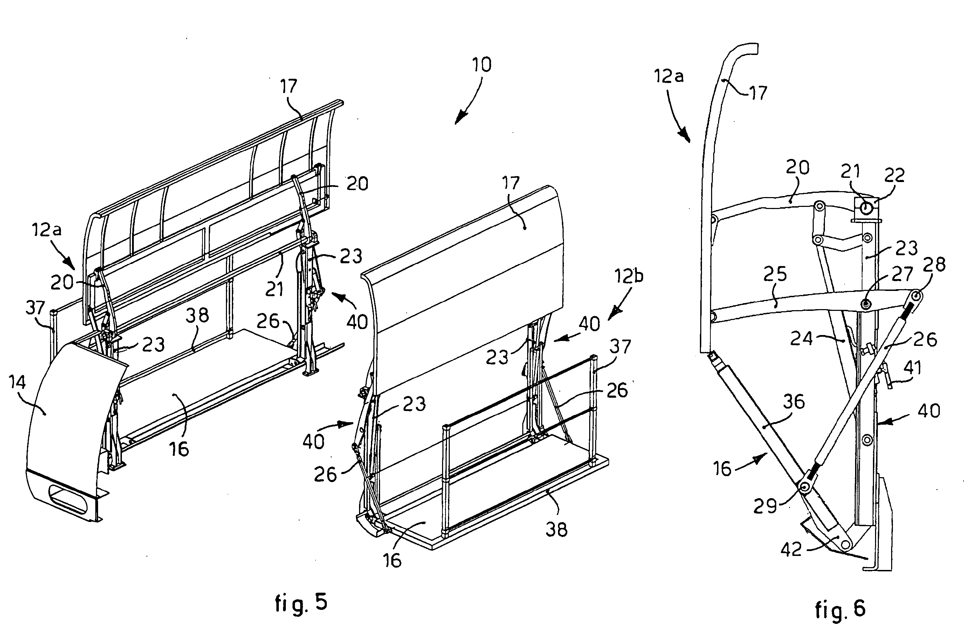

With reference to fig. 5, each of the external lateral walls 12a and 12b comprises a support element 16 and a protection element 17, disposed in the closed operating position one adjacent to the other, in a substantially vertical position and partly overlapping.

In particular, each protection element 17 defines, partly or wholly, the visible surface of each of the lateral walls 12a and 12b, while each support element 16 is disposed adjacent to the surface of the relative protection element 17 facing toward the inside of each compartment 19a and 19b.

In the closed operating position, the support element 16 and the protection element 17 are adjacent to a pair of uprights 23.

Furthermore, each lateral wall 12a and 12b comprises a safety railing 37 disposed hinged to an external edge 38 of the support element 16 and, in the closed operating position, adjacent thereto.

According to a variant, not shown here, the railing 37 is divided into modules bendable in correspondence with the external edge 38.

With particular reference to figs. 5 and 6, each lateral wall 12a and 12b comprises the support element 16, the protection element 17, a movement unit 40 and command members 41 of the movement unit 40.

The movement unit 40 moves the protection element 17 with respect to the uprights 23 and connects it kinematically to the support element 16, determining the movement of the latter as described hereafter.

The command members 41 are of a known type, for example hydraulic or electric or other.

In this case, the movement unit 40 comprises a pair of support elements 22, a shaft 21, two levers 20 of equal length, a pair of cylinders 24, a pair of transmission levers 25, a pair of tie rods 26 and two lever-type kinematisms 42.

Each support element 22, for example of the type provided with a ball bearing or a bearing brass, is disposed fixed to the upper end of one of the two uprights 23.

The support elements 22 support a shaft 21 in correspondence with its end zones.

The levers 20, at a first end, are attached to the shaft 21. The second end of the levers 20 is hinged to the protection element 17.

A cylinder 24 is kinematically connected to each lever 20, has one end pivoted to one of the two uprights 23 and is able to rotate with respect to the upright 23.

A respective transmission lever 25 is also connected to each upright 23, by means of a first rotation pin 27. The transmission lever 25 has one end hinged to the protection element 17 and one end connected to a first end of a respective tie rod 26 by means of a second rotation pin 28.

The second end of each tie rod 26 is connected by means of a third rotation pin 29 to a lateral edge of the support element 16.

The support element 16 is also kinematically connected to the lower end of each upright 23 by means of a lever-type kinematism 42.

Fig. 6 shows the detail of the bodywork 10, comprising the support element 16, the protection element 17, the relative movement unit 40 and the command members 41, in a semi-open position.

The method to open the bodywork 10 shown is as follows. The cylinder 24 is driven by means of the command members 41, determining the rotation of the shaft 21 and of the relative levers 20.

Consequently, the protection element 17 is moved upward, because it is hinged to the levers 20, allowing to open the compartment 19a.

The movement of the protection element 17 entails the rotation of the transmission lever 25 around the first rotation pin 27, and the transmission lever 25 transmits motion to the tie rod 26 by means of the second pin 28. The tie rod 26, in turn, rotating around the third pin 29, allows the support element 16 to lower, thanks to the lever-type kinematism which connects it to the upright 23.

Following the lowering of the support element 16, the railing 37 is lifted manually by rotating it around the axis of hinging with the support element 16, until it reaches a vertical position.

In this preferential form of embodiment, the support element 16 assumes in the open condition a substantially horizontal position.

The shape and sizes of the support element 16 are such that, in the open condition, it defines a walking plane on which the worker can move and access the inspection compartments 19a, 19b of the machine.

The safety of the worker is guaranteed by the presence of the railing 37 which prevents accidental falls.

The protection element 17 on the contrary has a conformation such as to function, in the open operating position, as a protective parapet if the workers are operating and moving on the upper walls 11a, 11b.

According to a variant, not shown here, each lateral wall 12a and 12b comprises one or more sound-proofing panels, selectively movable, able to reduce the propagation of the noise produced by the propelling device and/or by the mechanical members 34, if the workers are carrying out inspections and/or maintenance operations working on one of the upper walls 11 a, 11b when the machine is functioning.

It is clear, however, that modifications and/or additions of parts may be made to the bodywork 10 as described heretofore, without departing from the field and scope of the present invention.

It is also clear that, although the present invention has been described with reference to specific examples, a person of skill in the art shall certainly be able to achieve many other equivalent forms of bodywork for an operating machine, having the characteristics as set forth in the claims and hence all coming within the field of protection defined thereby.

## Claims

1. Bodywork to cover an operating machine (30), comprising at least a frame (18), provided with a plurality of uprights (23), and a plurality of walls (11a, 11b, 12a, 12b, 13a, 13b, 14, 15), of which at least upper walls (11a, 11b) and lateral walls (12a, 12b; 13a, 13b), connected to each other so as to delimit a bulk inside which at least a housing compartment (19a, 19b) is provided, at least one of said lateral walls (12a, 12b) comprising at least a portion of wall (16, 17) selectively movable between a first operating position, closing said housing compartment (19a, 19b), in which said portion of wall (16, 17) is substantially adjacent to at least one of said uprights (23) and comprised in said bulk, and a second operating position, opening said housing compartment (19a, 19b), in which said portion of wall (16, 17) is protruding toward the outside with respect to said bulk, said portion of wall (16, 17) providing anchoring means (20, 25, 26) able to be selectively activated so as to maintain said portion of wall (16, 17) in a stable position in said second operating position, wherein said lateral wall (12a, 12b) comprises two portions of wall, of which a first portion of wall (16) selectively movable from the first operating position to the second operating position, in which it defines a substantially horizontal plane and thus functions as a gangway element, and a second portion of wall (17) disposed substantially parallel and adjacent to the plane on which the first position of wall (16) lies in the first operating position, **characterized in that** said second portion of wall (17) is selectively translatable from said first operating position to the second operating position in which it defines a substantially vertical plane and thus functions as a parapet element with respect to the relative upper wall (11a, 11b).

2. Bodywork as in claim 1, **characterized in that** it comprises movement means (40) connected to the portion of wall (16, 17) and to the frame (18), and able to selectively move said portion of wall (16, 17).

3. Bodywork as in claim 1, **characterized in that** the first portion of wall (16) and the second portion of wall (17) are kinematically connected to each other.

4. Bodywork as in claims 2 and 3, **characterized in that** the kinematic connection between the first portion of wall (16) and the second portion of wall (17) is achieved by the movement means (40).

5. Bodywork as in claim 2, **characterized in that** it comprises command members (41), connected to the movement means (40) and able to be selectively activated, for the automatic movement of said portion of wall (16, 17).

6. Bodywork as in any claim hereinbefore, **characterized in that** it comprises safety means (37) associated with the portion of wall (16, 17) and selectively movable from a closed operating position to an open operating position.

7. Bodywork as in any claim hereinbefore, **characterized in that** said portion of wall is conformed so as to have a resistance to the lateral or vertical thrust in said second operating position and thus to function, respectively, as a parapet element (17) or as a gangway element (16) for the operators.

8. Operating machine provided with a bodywork, said bodywork (10) comprising at least a frame (18), provided with a plurality of uprights (23), and a plurality of walls (11a, 11b, 12a, 12b, 13a, 13b, 14, 15), of which at least upper walls (11a, 11b) and lateral walls (12a, 12b; 13a, 13b), connected to each other so as to delimit a bulk inside which at least a housing compartment (19a, 19b) is provided, at least one of said lateral walls (12a, 12b) comprising at least a portion of wall (16, 17) selectively movable between a first operating position, closing said housing compartment (19a, 19b), in which said portion of wall (16, 17) is substantially adjacent to at least one of said uprights (23) and comprised in said bulk, and a second operating position, opening said housing compartment (19a, 19b), in which said portion of wall (16, 17) is protruding toward the outside with respect to said bulk, said portion of wall (16, 17) providing anchoring means (20, 25, 26) able to be selectively activated so as to maintain said portion of wall (16, 17) in a stable position in said second operating position, and being conformed so as to have a resistance to the lateral or vertical thrust in said second operating and thus to function, respectively, as a parapet element (17) or as a gangway element (16) for the operators, wherein said lateral wall (12a, 12b) comprises two portions of wall, of which a first portion of wall (16) selectively movable from the first operating position to the second operating position, in which it defines a substantially horizontal plane and thus functions as a gangway element, and a second portion of wall (17) disposed substantially parallel and adjacent to the plane on which the first portion of wall (16) lies in the first operating position, **characterized in that** said second portion of wall (17) is selectively translatable from said first operating position to the second operating position in which it defines a substantially vertical plane and thus functions as a parapet element with respect to the relative upper wall (11a, 11b).

## Patentansprüche

1. Karosserie zur Abdeckung einer Arbeitsmaschine (30), zumindest umfassend einen Rahmen (18), ausgestattet mit einer Vielzahl von Ständern (23), und einer Vielzahl von Wänden (11a, 11b, 12a, 12b, 13a, 13b, 14, 15), von welchen zumindest obere Wände (11a, 11b) und seitliche Wände (12a, 12b, 13a, 13b) miteinander verbunden sind, um ein Gehäuse zu bestimmen, in welchem zumindest ein Gehäuseraum (18a, 19b) vorgesehen ist, wobei zumindest eine der seitlichen Wände (12a, 12b) zumindest einen Wandteil (16, 17) umfasst, wahlweise beweglich zwischen einer ersten Arbeitsposition, in welcher der Gehäuseraum (19a, 19b) geschlossen ist, und in welcher der Wandteil (16, 17) im Wesentlichen an zumindest einem der Ständer (23) anliegt und von dem Gehäuse umfasst wird, und einer zweiten Arbeitsposition, in welcher der Gehäuseraum (19a, 19b) geöffnet ist, und in welcher der Wandteil (16,17) in Bezug auf das Gehäuse nach außen herausragt, wobei der Wandteil (16, 17) Verankerungsmittel (20, 25, 26) umfasst, welche wahlweise aktiviert werden können, um den Wandteil (16, 17) in einer stabilen Position in der zweiten Arbeitsposition zu halten, wobei die seitliche Wand (12a, 12b) zwei Wandteile umfasst, von welchen ein erster Wandteil (16) wahlweise bewegbar von der ersten Arbeitsposition zu der zweiten Arbeitsposition ist, in welcher er eine im Wesentlichen horizontale Ebene definiert und auf diese Weise als Laufstegelement fungiert, und ein zweiter Wandteil (17) in im Wesentlichen paralleler und anliegender Anordnung zu der Ebene auf welcher der erste Wandteil (16) in der ersten Arbeltsposition liegt, **dadurch gekennzeichnet, dass** der zweite Wandteil (17) wahlweise versetzbar von der ersten Arbeitsposition in die zweite Arbeitsposition ist, in welcher der zweite Wandteil eine im Wesentlichen vertikale Ebene definiert und auf diese Weise als Brüstungselement bezüglich der relativen oberen Wand (11a, 11b) fungiert.

2. Karosserie nach Anspruch 1, **dadurch gekennzeichnet, dass** sie Bewegungsmittel (40) umfasst, verbunden mit dem Wandteil (16, 17) und dem Rahmen (18), und in der Lage das Wandteil (16, 17) wahlweise zu bewegen.

3. Karosserie nach Anspruch 1, **dadurch gekennzeichnet, dass** das erste Wandteil (16) und das zweite Wandteil (17) kinematisch miteinander verbunden sind.

4. Karosserie nach den Ansprüchen 2 und 3, **dadurch gekennzeichnet, dass** die kinematische Verbindung zwischen dem ersten Wandteil (16) und dem zweiten Wandteil (17) über die Bewegungsmittel (40) erzielt wird.

5. Karosserie nach Anspruch 2, **dadurch gekennzeichnet, dass** sie Führungselemente (41) umfasst, verbunden mit den Bewegungsmitteln (40) und fähig wahlweise aktiviert zu werden zur automatischen Bewegung des Wandteils (16, 17).

6. Karosserie nach einem der vorhergehenden Ansprüche, **dadurch gekennzeichnet, dass** sie Sicherheitsmittel (37) umfasst, verbunden mit dem Wandteil (16, 17) und wahlweise von einer geschlossenen Arbeitsposition zu einer offenen Arbeitsposition bewegbar.

7. Karosserie nach einem der vorhergehenden Ansprüche, **dadurch gekennzeichnet, dass** der Wandteil so angepasst ist, dass er in der zweiten Arbeitsposition einen Widerstand gegen seitlichen oder vertikalen Stoß aufweist, und somit entsprechend als Brüstungselement (17) oder als Laufstegelement (16) für die Arbeiter fungiert.

8. Arbeitsmaschine ausgestattet mit einer Karosserie, wobei die Karosserie (10) zumindest einen Rahmen (18) umfasst, ausgestattet mit einer Vielzahl von Ständern (23), und einer Vielzahl von Wänden (11 a, 11b, 12a, 12b, 13a, 13b, 14, 15), von welchen zumindest obere Wände (11a, 11b) und seitliche Wände (12a, 12b, 13a, 13b) miteinander verbunden sind, um ein Gehäuse zu bestimmen, in welchem zumindest ein Gehäuseraum (19a, 19b) vorgesehen ist, wobei zumindest eine der seitlichen Wände (12a, 12b) zumindest einen Wandteil (16, 17) umfasst, wahlweise beweglich zwischen einer ersten Arbeitsposition, in welcher der Gehäuseraum (19a, 19b) geschlossen ist, und in welcher der Wandteil (16, 17) im Wesentlichen an zumindest einem der Ständer (23) anliegt und von dem Gehäuse umfasst wird, und einer zweiten Arbeitsposition, in welcher der Gehäuseraum (19a, 19b) geöffnet ist, und in welcher der Wandteil (16, 17) in Bezug auf das Gehäuse nach außen herausragt, wobei der Wandteil (16, 17) Verankerungsmittel (20, 25, 26) umfasst, welche wahlweise aktiviert werden können, um den Wandteil (16, 17) in einer stabilen Position in der zweiten Arbeitsposition zu halten, wobei der Wandteil so angepasst ist, dass er in der zweiten Arbeitsposition einen Widerstand gegen seitlichen oder vertikalen Stoß aufweist, und entsprechend als Brüstungselement (17) oder als Laufstegelement (16) für die Arbeiter fungiert, wobei die seitliche Wand (12a, 12b) zwei Wandteile umfasst, von welchen ein erster Wandteil (16) wahlweise bewegbar von der ersten Arbeitsposition zu der zweiten Arbeitsposition ist, in welcher er eine im Wesentlichen horizontale Ebene definiert und auf diese Weise als Laufstegelement fungiert, und ein zweiter Wandteil (17) in im Wesentlichen paralleler und anliegender Anordnung zu der Ebene auf welcher der erste Wandteil (16) in der ersten Arbeitsposition liegt, **dadurch gekennzeichnet, dass** der zweite Wandteil (17) wahlweise versetzbar von der ersten Arbeitsposition in die zweite Arbeitsposition ist, in welcher der zweite Wandteil eine im Wesentlichen vertikale Ebene definiert und auf diese Weise als Brüstungselement bezüglich der relativen oberen Wand (11a, 11b) fungiert.

## Revendications

1. Caisse pour couvrir une machine de travail (30), comprenant au moins un cadre (18), pourvu d'une pluralité de montants (23), et d'une pluralité de parois (11a, 11b, 12a, 12b, 13a, 13b, 14, 15), dont au moins des parois supérieures (11a, 11b) et des parois latérales (12a, 12b) ; 13a, 13b) sont reliées les unes aux autres afin de délimiter un volume à l'intérieur duquel au moins un compartiment de logement (19a, 19b) est prévu, au moins une desdites parois latérales (12a, 12b) comprenant au moins une partie de paroi (16, 17) sélectivement mobile entre une première position de fonctionnement, fermant ledit compartiment de logement (19a, 19b), dans laquelle ladite partie de paroi (16, 17) est sensiblement adjacente à au moins un desdits montants (23) et comprise dans ledit volume, et une seconde position de fonctionnement, ouvrant ledit compartiment de logement (19a, 19b), dans laquelle ladite partie de paroi (16, 17) fait saillie vers l'extérieur par rapport audit volume, ladite partie de paroi (16, 17) fournissant des moyens d'ancrage (20, 25, 26) capables d'être sélectivement activés afin de maintenir ladite partie de paroi (16, 17) dans une position stable dans ladite seconde position de fonctionnement, dans laquelle ladite paroi latérale (12a, 12b) comprend deux parties de paroi, dont une première partie de paroi (16) est sélectivement mobile de la première position de fonctionnement à la seconde position de fonctionnement, dans laquelle elle définit un plan sensiblement horizontal et ainsi sert d'élément de passerelle, et une seconde partie de paroi (17) est disposée de façon sensiblement parallèle et adjacente au plan sur lequel la première position de paroi (16) se trouve dans la première position de fonctionnement, **caractérisée en ce que** ladite seconde partie de paroi (17) est sélectivement translatable de ladite première position de fonctionnement à la seconde position de fonctionnement dans laquelle elle définit un plan sensiblement vertical et ainsi sert d'élément de parapet par rapport à la paroi supérieure relative (11a, 11b).

2. Caisse selon la revendication 1, **caractérisée en ce qu'**elle comprend des moyens de mouvement (40) reliés à la partie de paroi (16, 17) et au cadre (18), et capables de déplacer sélectivement ladite partie de paroi (16, 17).

3. Caisse selon la revendication 1, **caractérisée en ce que** la première partie de paroi (16) et la seconde partie de paroi (17) sont reliées l'une à l'autre de façon cinématique.

4. Caisse selon les revendications 2 et 3, **caractérisée en ce que** la liaison cinématique entre la première partie de paroi (16) et la seconde partie de paroi (17) est réalisée par les moyens de mouvement (40).

5. Caisse selon la revendication 2, **caractérisée en ce qu'**elle comprend des éléments de commande (41), reliés aux moyens de mouvement (40) et capables d'être sélectivement activés, pour le mouvement automatique de ladite partie de paroi (16, 17).

6. Caisse selon une quelconque revendication précédente, **caractérisée en ce qu'**elle comprend des moyens de sécurité (37) associés à la partie de paroi (16, 17) et mobiles sélectivement d'une position de fonctionnement fermée à une position de fonctionnement ouverte.

7. Caisse selon une quelconque revendication précédente, **caractérisée en ce que** ladite partie de paroi est conformée afin de posséder une résistance à la poussée latérale ou verticale dans ladite seconde position de fonctionnement et ainsi de servir, respectivement, d'élément de parapet (17) ou d'élément de passerelle (16) pour les opérateurs.

8. Machine de travail pourvue d'une caisse, ladite caisse (10) comprenant au moins un cadre (18), pourvu d'une pluralité de montants (23), et d'une pluralité de parois (11a, 11b, 12a, 12b, 13a, 13b, 14, 15), dont au moins des parois supérieures (11a, 11b) et des parois latérales (12a, 12b ; 13a, 13b) sont reliées les unes aux autres afin de délimiter un volume à l'intérieur duquel au moins un compartiment de logement (19a, 19b) est prévu, au moins une desdites parois latérales (12a, 12b) comprenant au moins une partie de paroi (16, 17) sélectivement mobile entre une première position de fonctionnement, fermant ledit compartiment de logement (19a, 19b), dans laquelle ladite partie de paroi (16, 17) est sensiblement adjacente à au moins un desdits montants (23) et comprise dans ledit volume, et une seconde position de fonctionnement, ouvrant ledit compartiment de logement (19a, 19b), dans laquelle ladite partie de paroi (16, 17) fait saillie vers l'extérieur par rapport audit volume, ladite partie de paroi (16, 17) fournissant des moyens d'ancrage (20, 25, 26) capables d'être sélectivement activés afin de maintenir ladite partie de paroi (16, 17) dans une position stable dans ladite seconde position de fonctionnement, et étant conformée afin de posséder une résistance à la poussée latérale ou verticale dans ladite seconde position de fonctionnement et ainsi de servir, respectivement, d'élément de parapet (17) ou d'élément de passerelle (16) pour les opérateurs, dans laquelle ladite paroi latérale (12a, 12b) comprend deux parties de paroi, dont une première partie de paroi (16) est sélectivement mobile de la première position de fonctionnement à la seconde position de fonctionnement, dans laquelle elle définit un plan sensiblement horizontal et ainsi sert d'élément de passerelle, et une seconde partie de paroi (17) est disposée de façon sensiblement parallèle et adjacente au plan sur lequel la première partie de paroi (16) se trouve dans la première position de fonctionnement, **caractérisée en ce que** ladite seconde partie de paroi (17) est sélectivement translatable de ladite première position de fonctionnement à la seconde position de fonctionnement dans laquelle elle définit un plan sensiblement vertical et ainsi sert d'élément de parapet par rapport à la paroi supérieure relative (11a, 11b).
